# EUROPÄISCHE PATENTANMELDUNG

(11) **EP 0 687 778 A1**
(43) Veröffentlichungstag der Anmeldung: **20.12.1995**
(21) Anmeldenummer: 95108153.8
(22) Anmeldetag: 29.05.1995
(51) Int. Cl.: E03C 1/05

(54) **Wasserarmaturensteuerung**

(30) Priorität: 10.06.1994 DE 4420334
(71) Anmelder: FRIEDRICH GROHE AKTIENGESELLSCHAFT, D-58675 Hemer (DE)
(72) Erfinder: Eichholz, Heinz-Dieter, Dr., D-58642 Iserlohn (DE)

(57) **Zusammenfassung**

Bei einer Wasserarmaturensteuerung mit berührungslos einstellbaren System- und/oder Betriebsparametern ist zur Verbesserung vorgeschlagen, daß eine nichtflüchtige Speicherung der System- und/oder Betriebsparameter der Steuerung in einem oder mehreren von der Versorgungsspannung der Steuerung unabhängigen Speicher (n) vorgesehen ist.

## Beschreibung

Die Erfindung betrifft eine Wasserarmaturensteuerung mit berührungslos einstellbaren System- und/oder Betriebsparametern.
Einrichtungen zur berührungslosen Parametrisierung von Sanitärarmaturen mittels einer Infrarotsteuerung sind hinreichend bekannt (DE 38 07 844 C1) bzw. bereits auf dem Markt erhältlich. Der Vorteil einer berührungslosen Änderung von Systemparametern einer Sanitärarmatur liegt einerseits darin, bestimmte Betriebsfunktionen oder Betriebsmodi, wie Test-/Abgleichmodus, Dauerbetrieb, Pausenschaltung, Vorlauf zur thermischen Desinfektion u.v.m., ohne zusätzliche armatureninterne Bedienelemente zu aktivieren, andererseits darin, interne Steuerungsfunktionen wie Erfassungsbereich, Nachlaufzeit, Spüldauer, Verzögerungszeiten etc. ohne direkten Eingriff auf interne oder externe Einstellregler zu modifizieren. Weiterhin kann eine Fernabfrage interner Betriebszustände, beispielsweise Batteriespannung, durchgeführt werden. Derartige Sanitärarmaturen müssen zur Einstellung bestimmter Systemparameter daher nicht mehr geöffnet werden (Spezialwerkzeuge, Vandalismus) bzw. kann die Zugriffsberechtigung auf einzelne Systembetriebsarten bzw. -parameter anwenderselektiv bzw. parameterselektiv (Ein/Aus, Timerfunktionen, Erfassungsbereich etc.) durch unterschiedliche Ausführungen der Infrarothandsender ausgeführt werden. Die derzeitigen Ausführungsformen von Sanitärarmaturensteuerungen mit der o.g. Eigenschaft der berührungslosen Parametrisierung bzw. einer berührungslosen Funktionsselektion sehen bislang zwar eine Speicherung der modifizierten Parameter während des Normalbetriebs vor, die gewählten Einstellungen jedoch stehen nach Ausfall der Spannungsversorgung bzw. Entnahme der geräteinternen Energiequelle (Batterie) nicht mehr zur Verfügung. Bestenfalls wird nach einer Wiederinbetriebnahme der Sanitärsteuerung eine werksseitig bzw. herstellerseitig vorgenommene Grundparametrisierung vorgenommen bzw. eine Standardbetriebsart ausgeführt.

Der Erfindung liegt daher die Aufgabe zugrunde, die gattungsmäßige Wasserarmaturensteuerung zu verbessern, insbesondere derart, daß die einmal modifizierten Parameter- bzw. Gerätefunktionen einer Wasserarmaturensteuerung, beispielsweise für eine berührungslos gesteuerte Wasserauslaufarmatur, auch bei einer Unterbrechung der Versorgungsspannung (Netzausfall, Batteriewechsel) nach Wiederaufnahme der Spannungsversorgung unverändert erhaltenbleiben bzw. wieder übernommen werden können.
Diese Aufgabe wird erfindungsgemäß dadurch gelöst, daß eine nichtflüchtige Speicherung der System- und/oder Betriebsparameter der Steuerung in einem oder mehreren, von der Versorgungsspannung der Steuerung unabhängigen Speicher (n) vorgesehen ist.
Weitere Ausgestaltungen der Erfindung sind in den Ansprüchen 2 bis 7 angegeben.

Die Vorteile dieser Ausführungsform einer Wasserarmaturensteuerung mit berührungsloser Parametrisierung liegen darin, daß bei einer Unterbrechung der Versorgungsspannung keine Neujustierung der Systemparameter zur Wiedererlangung exakt der vor Eintritt der Unterbrechung in der Energieversorgung der Steuerung programmierten Gerätefunktionen bzw. Systemeigenschaften erforderlich ist. Weiterhin werden keinerlei Einstell- bzw. Abgleichvorrichtungen wie Potentiometer, Einstellregler, Funktionswahlschalter etc. innerhalb der Schaltung für die Steuerelektronik mehr benötigt.

So kann z.B. der allgemein übliche Einstellregler für die Spüldauer einer berührungslos ausgelösten Urinalsteuerung entfallen, da der die Spüldauer bestimmende Einstellwert für das betreffende Zeitglied (Timer) beispielsweise während eines Initialabgleichs des Systems in den nichtflüchtigen Speicher der Steuerung eingebracht wird. Während der Systeminitialisierung (power on) wird dieser Einstellwert aus dem nichtflüchtigen Speicher in das die Spüldauer bestimmende Zeitglied übernommen (z.B. Register im Arbeitsbereich einer MCU). Ebenso verhält es sich mit den Einstell-/Abgleichreglern für die Reichweite der Sensorik (Erfassungsbereich), Betriebsart- bzw. Funktionsselektionsschaltern und anderen analogen und/oder digitalen Einstell-/Abgleichvorrichtungen einer Steuerungselektronik für Sanitärarmaturen.

Weiterhin ermöglicht die nichtflüchtige Speicherung von Systemparametern einen einfachen, automatisierten Abgleich bzw. eine automatische Funktionseinstellung der Steuerung, da die Änderung der Systemparameter nicht durch die mechanische Verstellung von Abgleich-/Einstellvorrichtungen, wie beispielsweise Potentiometer, Trimmwiderstände, DIP-Schalter etc., vorgenommen wird, sondern durch unmittelbare bzw. mittelbare Informationseingabe direkt oder indirekt in den nichtflüchtigen Speicher des Systems erfolgt. Da keine mechanischen Einstellmöglichkeiten mehr benötigt werden, kann ein Systemabgleich auch z.B. nach dem Verguß der Steuerelektronik (Feuchtigkeitsschutz, Schutz gegen mechanische Beanspruchung) bzw. nach erfolgter Komplettierung von Armatur und Steuerung erfolgen. Die bislang aufwendige Gehäusung für eine Steuerungselektronik mit entsprechenden Abdichtungen der als zugänglich auszuführenden mechanischen Abgleich-/Einstellvorrichtungen gegenüber Umgebungseinflüssen (Feuchtigkeit) entfällt.

Eine Steuerung für Sanitärarmaturen mit nichtflüchtigem Speicher ermöglicht insbesondere in Verbindung mit einer Einrichtung zur berührungslosen Veränderung von Systemparametern darüber hinaus die hermetische Verkapselung der Steuerungselektronik durch Verguß oder Kunststoffumspritzung etc. Dies bietet neben der bereits erwähnten Vereinfachung der Gehäusung den Vorteil einer höheren Zuverlässigkeit der Schaltung infolge des verbesserten Feuchtigkeitsschutzes und der höheren mechanischen Stabilität des Systems (Lebensdauer, Betriebssicherheit).

Insbesondere im Zusammenwirken mit einer Einrichtung zur berührungslosen Parametrisierung einer derartigen Steuerung ergeben sich weitere wichtige Vorteile:
- jederzeit mögliche Änderung des Systemverhaltens ohne mittelbaren Eingriff auf die Mechanik der Steuerungselektronik unter Beibehaltung der eingestellten Parametrisierung, auch ohne Spannungsversorgung für die Steuerung
- einfache Gehäusung der Steuerungselektronik, da Einstell-/Abgleichmaßnahmen keinen (mechanischen) Eingriff in die Systemelektronik mehr erforderlich machen
- selektive Zugriffsberechtigung auf Systemparameter in mehreren Ebenen, die vom Nutzerverhalten abhängig gemacht werden können
- nichtflüchtige Speicherung von Systemdaten (wie z.B. Betriebsstundenzähler, Ventilbetätigungszähler, Fertigungsdatum etc.) für Diagnose und statistische Auswertung
- Auswahl kundenspezifischer Einstellungen (durch Makros) für Fernbedienung o.dgl. ohne Softwareänderung und Selektion der Steuercodes möglich.

Die nichtflüchtige Speicherung von System- und/oder Betriebsparametern einer Steuerungselektronik für Systemarmaturen kann in analoger und/oder digitaler Weise erfolgen. Es können nichtflüchtige analoge und/oder digitale Kurzzeitspeicher als auch nichtflüchtige analoge und/oder digitale Festwertspeicher (Langzeitspeicher) verwendet werden.

Nichtflüchtige Kurzzeitspeicher ermöglichen den Erhalt der im Speicher abgelegten Information nur über eine begrenzte Zeitdauer (Minuten bis Tage), während die Gruppe der Langzeitspeicher einen Informationserhalt bis über 40 Jahre - auch bei fehlender Versorgungsspannung - für die Steuerungselektronik ermöglicht.

Vorzugsweise wird ein nichtflüchtiger, digitaler Festwertspeicher in der Form eines E²PROMs verwendet. Es sind jedoch auch andere Ausführungsformen von Langzeitspeichern, wie z.B.
- Flash-EPROM
- batteriegepuffertes statisches RAM
- kondensatorgepuffertes statisches RAM
- DAS-Chips
- digitale Potentiometer

möglich. Als weitere Realisierungsmöglichkeit einer Steuerung mit nichtflüchtigem Speicher bietet sich der Einsatz eines Microcontrollers mit integriertem On-Chip E²PROM an.

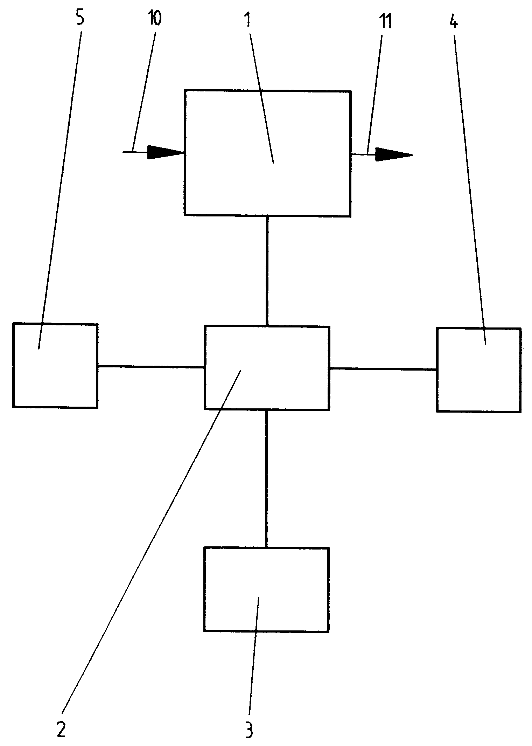

Ein Ausführungsbeispiel der Erfindung ist in der Zeichnung als Blockschaltbild in schematischer Weise dargestellt. Hierin ist mit 1 eine Wasserauslaufarmatur bezeichnet, wie sie in Sanitärräumen für Waschbecken, Urinalspülungen etc. eingesetzt wird, wobei die Wasserauslaufarmatur 1 mit einem Wasserzulauf 10 und einem Wasserauslauf 11 versehen ist. In der Wasserauslaufarmatur 1 ist ein Magnetventil angeordnet, das von einer elektronischen Steuerung 2 ansteuerbar ist. Hierbei ist im Bereich des Wasserauslaufs 11 eine Detektionseinrichtung 4 angeordnet, mit der die Anwesenheit eines Benutzers mit Hilfe eines beispielsweise getakteten Infrarotstrahles feststellbar ist. Bei der Feststellung der Anwesenheit eines Benutzers erzeugt die Detektionseinrichtung ein Signal, das an eine elektronische Steuerung 2 abgegeben wird, in der nun ein entsprechendes Wasserauslaßprogramm über einen Microcontroller abgearbeitet wird, wobei dem Magnetventil in der Wasserauslaufarmatur 1 nach einem vorbestimmten Zeitraum (Verzögerungszeit) ein Öffnungsimpuls und nach einem ebenfalls vorbestimmten Öffnungszeitraum wieder ein Schließimpuls zugeführt wird. Die elektrische Energieversorgung der Steuerung 2 mit der Detektionseinrichtung 4 und dem in der Wasserauslaufarmatur 1 angeordneten Magnetventil erfolgt von einer Batterie 5, die beispielsweise ebenfalls in der Wasserauslaufarmatur 1 integriert sein kann.
Die Parameter der Verzögerungszeit, der öffnungszeit etc. werden der Steuerung über die Detektionseinrichtung 4 von einem Fernsteuergerät, vorzugsweise Infrarothandsender (in der Zeichnung nicht dargestellt), eingegeben. Für den sicheren Verbleib dieser über die Fernsteuerung eingegebenen Parameter etc. ist ein besonderer Speicher 3 vorgesehen.
Der Speicher 3 ist dabei als nichtflüchtiger Speicher ausgebildet und somit unabhängig von der Versorgungsspannung der Steuerung. Bei einem Ausfall der Batterie bleiben somit die eingegebenen Parameter in dem Speicher 3 erhalten, so daß z.B. nach einem Batterieaustausch die Anlage mit den zuletzt eingestellten Werten für beispielsweise öffnungszeitraum und Verzögerungszeit weiterbetrieben werden kann.

## Patentansprüche

1. Wasserarmaturensteuerung mit berührungslos einstellbaren System- und/oder Betriebsparametern, dadurch gekennzeichnet, daß eine nichtflüchtige Speicherung der System- und/oder Betriebsparameter der Steuerung (2) in einem oder mehreren von der Versorgungsspannung der Steuerung (2) unabhängigen Speicher (n) (3) vorgesehen ist.

2. Wasserarmaturensteuerung nach Anspruch 1, dadurch gekennzeichnet, daß die nichtflüchtige Speicherung in analoger und/oder digitaler Weise erfolgt.

3. Wasserarmaturensteuerung nach Anspruch 1 oder 2, dadurch gekennzeichnet, daß ein nichtflüchtiger Langzeitspeicher eingesetzt ist.

4. Wasserarmaturensteuerung nach Anspruch 1 oder 2, dadurch gekennzeichnet, daß ein nichtflüchtiger Kurzzeitspeicher oder eine Kombination von nichtflüchtigem Kurz- und Langzeitspeicher eingesetzt ist.

5. Wasserarmaturensteuerung nach wenigstens einem der Ansprüche 1 bis 4, dadurch gekennzeichnet, daß ein E²PROM als nichtflüchtiger digitaler Festwertspeicher eingesetzt ist.

6. Wasserarmaturensteuerung nach wenigstens einem der Ansprüche 1 bis 4, dadurch gekennzeichnet, daß als digitaler Langzeitspeicher ein Flash-EPROM und/oder statisches RAM, kondensator- oder batteriegepuffert und/oder DAS-Chip und/oder digitales Potentiometer eingesetzt ist.

7. Wasserarmaturensteuerung nach wenigstens einem der Ansprüche 1 bis 4, dadurch gekennzeichnet, daß in der Steuerung (2) ein Microcontroller mit integriertem On-Chip E²PROM eingesetzt ist.
